# EUROPEAN PATENT APPLICATION

(11) **EP 4 663 681 A1**
(43) Date of publication of application: **17.12.2025**
(21) Application number: 24767438.5
(22) Date of filing: 07.03.2024
(51) Int. Cl.: C08G 63/16, C08G 63/78, C08L 67/02, C09J 167/00

(54) **BIODEGRADABLE ADHESIVE COMPOSITION**

(30) Priority: 07.03.2023 KR 20230029748
(71) Applicant: Nature Ask Co., Ltd, Gimpo-si Gyeonggi-do 10049 (KR); Kim, Hyo Yeol, Gyeongsangnam-do 53100 (KR)
(72) Inventor: CHOI, Woo Suk, Incheon 22395 (KR); KWON, Youngjin, Hanam-si Gyeonggi-do 12924 (KR); KIM, Hyo Yeol, Tongyeong-si Gyeongsangnam-do 53100 (KR)
(74) Representative: BCKIP Part mbB
(86) International application number: PCT/KR2024/002966
(87) International publication number: WO 2024/186150

(57) **Abstract**

The present disclosure provides a biodegradable polyester polymer for adhesives, prepared using poly(neopentylene sebacate) oligomers, in order to address the problem of non-biodegradability in conventional polymers prepared using carcinogenic isocyanates, polyols, or tackifiers. The biodegradable polyester polymer exhibits excellent solubility and storage stability, and an adhesive composition comprising the biodegradable polyester polymer can exhibit excellent tackiness and peel strength even without the addition of a separate tackifier.

## Description

### CROSS-REFERENCE TO RELATED APPLICATION(S)

### BACKGROUND

### 1. FIELD

The present disclosure relates to a biodegradable polyester polymer for adhesives, and a biodegradable adhesive composition comprising the same.

### 2. DESCRIPTION OF RELATED ART

To address environmental pollution caused by plastic usage, methods of using alternative materials such as paper and biodegradable polymers that decompose under specific conditions have been proposed as solutions, and related research and development are actively underway.

In the case of adhesives as well, this problem can be solved by replacing conventional polyester resins, which do not decompose upon disposal, with naturally biodegradable polyester resins. However, tackifiers such as rosin esters and terpene phenols, which are usually added during the preparation of adhesives for the purpose of improving tackiness, are difficult to biodegrade and cause environmental pollution.

In addition, when conventional polyester adhesives that use polyols such as trimethylolpropane are used by dissolving them in a solvent, they exhibit poor solubility and dispersibility in solvents, insufficient solvent stability, a high softening point, resulting in significantly reduced tackiness at or below room temperature, and are difficult to recycle. Moreover, adhesives prepared by adding a large amount of isocyanates to increase molecular weight and improve tackiness are also difficult to recycle and do not biodegrade when disposed of in the natural environment, thereby causing environmental pollution.

Therefore, there is an urgent need for research and development on a biodegradable adhesive composition that exhibits good solubility in solvents and excellent tackiness, even without the use of isocyanates or polyols during the preparation of the polymer and without the inclusion of tackifiers.

### SUMMARY

In order to solve the problems of the prior art as described above, an object of the present disclosure is to provide a biodegradable polyester polymer having excellent solubility in solvents and storage stability, and a method for preparing the same.

Another object of the present disclosure is to provide an adhesive composition comprising a biodegradable polyester polymer for adhesives, which exhibits excellent tackiness even without the inclusion of a tackifier.

A biodegradable polyester polymer prepared from a polymerizable composition may comprise (a) a dicarboxylic acid-based compound including an aromatic dicarboxylic acid, an aliphatic dicarboxylic acid, or a mixture thereof, (b) an aliphatic glycol compound, and (c) a poly(neopentyl sebacate) oligomer.

The poly(neopentyl sebacate) oligomer may have a weight average molecular weight (Mw) of 2,000 to 6,000 g/mol.

The poly(neopentyl sebacate) oligomer may be included in an amount of 0.1 to 10 wt%, based on the total weight of the polymerizable composition.

The polymerizable composition further may comprise a multifunctional compound containing three or more polymerizable functional groups.

The polyfunctional compound may be included in an amount of 0.01 to 3 wt%, based on the total weight of the polymerizable composition.

The aliphatic glycol compound may include a C5-C7 aliphatic glycol compound.

The aliphatic glycol compound may include 30 to 90 mol% of neopentyl glycol and 10 to 70 mol% of a C2-C4 glycol.

The aliphatic dicarboxylic acid may be one or a combination of two or more selected from the group consisting of oxalic acid, malonic acid, succinic acid, glutaric acid, adipic acid, pimelic acid, sebacic acid, azelaic acid, 1,9-nonanedicarboxylic acid, 1,10-decanedicarboxylic acid, and anhydride derivatives thereof.

The aromatic dicarboxylic acid may be one or a combination of two or more selected from the group consisting of phthalic acid, isophthalic acid, and terephthalic acid.

The aliphatic dicarboxylic acid may be included in an amount of 50 to 100 wt%, based on the total weight of the dicarboxylic acid-based compound.

A molar ratio of the dicarboxylic acid-based compound and the aliphatic glycol compound may be 1:1 to 2.

The weight average molecular weight (Mw) may be 60,000 to 150,000 g/mol.

The glass transition temperature may be -40°C or less.

A method for preparing a biodegradable polyester polymer, may comprise (A) performing an esterification reaction of sebacic acid and an excess of neopentylene glycol, followed by polycondensation to prepare a poly (neopentylene sebacate) oligomer, and (B) performing esterification and transesterification reactions of a dicarboxylic acid-based compound, an aliphatic glycol compound, and the poly (neopentylene sebacate) oligomer, followed by polycondensation to prepare a polyester polymer.

The step (A), a molar ratio of the sebacic acid and the neopentylene glycol may be 1:1.1 to 1.5.

The present disclosure provides a biodegradable polyester polymer for adhesives, prepared using poly(neopentylene sebacate) oligomers, in order to address the problem of non-biodegradability in conventional polymers prepared using carcinogenic isocyanates, polyols, or tackifiers. The biodegradable polyester polymer exhibits excellent solubility and storage stability, and an adhesive composition comprising the biodegradable polyester polymer can exhibit excellent tackiness and peel strength even without the addition of a separate tackifier.

### DETAILED DESCRIPTION

As used herein, the term "oligomer" refers to a low-molecular-weight polymer prepared by polymerization of monomers, and specifically refers to a polymer having a weight-average molecular weight of 100 to 10,000 g/mol.

The present disclosure will be better understood by reference to the following examples, which are provided for illustrative purposes only and are not intended to limit the scope of the present disclosure as defined in the appended claims.

Hereinafter, an embodiment according to the present disclosure will be described in more detail.

The present disclosure provides a biodegradable polyester polymer prepared from a polymerizable composition comprising: (a) a dicarboxylic acid-based compound including an aromatic dicarboxylic acid, an aliphatic dicarboxylic acid, or a mixture thereof; (b) an aliphatic glycol compound, and (c) a poly(neopentylene sebacate) oligomer.

According to an embodiment of the present disclosure, the aromatic dicarboxylic acid preferably has 6 to 50 carbon atoms or 6 to 30 carbon atoms. Non-limiting examples thereof include one or a combination of two or more selected from the group consisting of phthalic acid, isophthalic acid, and terephthalic acid.

According to an embodiment of the present disclosure, the aliphatic dicarboxylic acid preferably has 2 to 30 carbon atoms or 2 to 20 carbon atoms. Non-limiting examples thereof include one or a combination of two or more selected from the group consisting of oxalic acid, malonic acid, succinic acid, glutaric acid, adipic acid, pimelic acid, sebacic acid, azelaic acid, 1,9-nonanedicarboxylic acid, 1,10-decanedicarboxylic acid, and anhydride derivatives thereof. The aliphatic dicarboxylic acid may be included in amount of 50 to 100 wt%, or preferably 75 to 100 wt%, based on the total weight of the dicarboxylic acid-based compound.

According to an embodiment of the present disclosure, the aliphatic glycol compound may include a C₂-C₁₀ aliphatic glycol compound. Non-limiting examples thereof include one or a combination of two or more selected from the group consisting of ethylene glycol, propylene glycol, neopentyl glycol, 1,4-butanediol, 1,5-pentanediol, 1,6-hexanediol, 1,2-octanediol, 1,6-octanediol, 1,9-nonanediol, 1,2-decanediol, and 1,10-decanediol.

Specifically, the aliphatic glycol compound may include a C₅-C₇ aliphatic glycol compound. The C₅-C₇ aliphatic glycol compound may be one or a combination of two or more selected from the group consisting of neopentyl glycol, 1,5-pentanediol, and 1,6-hexanediol.

According to an embodiment of the present disclosure, the aliphatic glycol compound may include a C₅-C₇ aliphatic glycol compound and a C₂-C₄ aliphatic glycol compound. Preferably, the C₅-C₇ aliphatic glycol compound may be neopentyl glycol, and the C₂-C₄ aliphatic glycol compound may be one or a combination of two or more selected from the group consisting of ethylene glycol, propylene glycol, and 1,4-butanediol.

According to an embodiment of the present disclosure, the aliphatic glycol compound may include neopentyl glycol and a C₂-C₄ aliphatic glycol compound, preferably, 30 to 90 mol% of neopentyl glycol and 10 to 70 mol% of the C₂-C₄ aliphatic glycol compound, or 50 to 80 mol% of neopentyl glycol, and 20 to 50 mol% of the C₂-C₄ aliphatic glycol compound.

According to an embodiment of the present disclosure, a molar ratio of the dicarboxylic acid-based compound to the aliphatic glycol compound may be 1:1 to 2, or 1:1.25 to 1.5.

According to an embodiment of the present disclosure, the poly(neopentylene sebacate) oligomer may be prepared by any conventional or known method in the art, or may be purchased as a commercially available product. However, the poly (neopentylene sebacate) oligomer may preferably be prepared by a method according to an embodiment of the present disclosure for its preparation.

According to an embodiment of the present disclosure, the poly (neopentylene sebacate) oligomer may have a weight average molecular weight (Mw) of 2,000 to 10,000 g/mol, and specifically 2,000 to 6,000 g/mol. In addition, the polydispersity index may be 1 to 5, preferably 1 to 3, but the present disclosure is not limited thereto. A biodegradable polyester polymer prepared using a poly (neopentylene sebacate) oligomer having the molecular weight range described above may exhibit excellent tackiness and peel strength.

According to an embodiment of the present disclosure, the poly(neopentylene sebacate) oligomer may be included in an amount of 0.1 to 30 wt%, specifically 0.1 to 10 wt%, and more specifically 1 to 3 wt%, based on the total weight of the polymerizable composition. When the content falls within the above range, the reactivity may be stabilized during the preparation of the biodegradable polyester polymer, and the resulting polymer may exhibit improved solubility, storage stability, and tackiness.

According to an embodiment of the present disclosure, the polymerizable composition may further comprise a polyfunctional compound containing three or more polymerizable functional groups. The polymerizable functional group may be a carboxyl group, a hydroxyl group, an amine group, or a combination of two or more thereof. Specifically, the polyfunctional compound may be a C₂-C₁₀ carboxylic acid compound containing one or more hydroxyl groups. Examples thereof include one or a combination of two or more selected from the group consisting of citric acid, tartaric acid, malic acid, and ascorbic acid. Preferably, the polyfunctional compound may be malic acid. The polyfunctional compound may be included in an amount of 0.01 to 3 wt% or 0.01 to 3 wt%, based on the total weight of the polymerizable composition. A polymer according to an embodiment may achieve improved solubility, storage stability, tackiness, and peel strength when the polyfunctional compound is included within the range described above.

According to an embodiment of the present disclosure, the biodegradable polyester polymer may be a branched polymer in order to achieve improved tackiness and peel strength. A biodegradable polyester polymer according to an embodiment may be prepared from a polymerizable composition comprising the polyfunctional compound described above, thereby enabling the preparation of a branched polymer, which in turn enables the preparation of a biodegradable polyester polymer for adhesives with improved properties.

According to an embodiment of the present disclosure, the biodegradable polyester polymer may have a weight average molecular weight (Mw) of 40,000 g/mol or more, or 60,000 g/mol or more, specifically 60,000 to 150,000 g/mol, more specifically 70,000 to 130,000 g/mol, or 80,000 to 120,000 g/mol.

According to an embodiment of the present disclosure, the biodegradable polyester polymer may have a glass transition temperature of -30°C or less, or -40°C or less, specifically -70°C to -40°C, and more specifically -60°C to -41°C.

The present disclosure may provide a biodegradable adhesive composition comprising the biodegradable polyester polymer described above. The biodegradable adhesive composition may comprise a solvent and the biodegradable polyester polymer described above. The solvent may be used without particular limitation as long as it is a solvent in which the biodegradable polyester polymer is dissolved. Examples thereof include one or a combination of two or more selected from the group consisting of toluene, coal tar naphtha, ethyl acetate, methyl ethyl ketone, cyclohexanone, isopropyl alcohol, ethyl alcohol, and methyl alcohol.

The biodegradable polyester polymer may be included in an amount of 1 to 99 wt%, or 20 to 80 wt%, or 20 to 60 wt%, based on the total weight of the biodegradable adhesive composition, but the present disclosure is not limited thereto, and the content may be easily adjusted depending on the viscosity.

According to an embodiment of the present disclosure, the biodegradable adhesive composition may not comprise additives such as a conventional tackifier, a polyurethane resin, a polyamide resin, a terpene phenol resin, and a rosin ester resin. The adhesive composition comprising the biodegradable polyester polymer according to the present disclosure may achieve excellent tackiness and peel strength even without the inclusion of the additives described above, and simultaneously, it is environmentally friendly due to its excellent biodegradability.

According to an embodiment of the present disclosure, the biodegradable adhesive composition may have a viscosity of 10,000 cP or less, or 10 to 8,000 cP, or 50 to 5,000 cP, but the present disclosure is not limited thereto. The viscosity may be easily adjusted according to the intended application.

According to an embodiment of the present disclosure, the biodegradable adhesive composition may be applied an application target. The method of application is not particularly limited as long as it is a commonly used method, and may be selected from dip coating, gravure coating, spray coating, reverse coating, and die coating.

Hereinafter, a method for preparing a biodegradable polyester polymer according to an embodiment of the present disclosure will is described in more detail.

The present disclosure may provide a method for preparing a biodegradable polyester polymer capable of lowering the glass transition temperature, comprising the following steps:
(A) performing an esterification reaction of sebacic acid and an excess of neopentylene glycol, followed by polycondensation to prepare a poly(neopentylene sebacate) oligomer; and
(B) reacting a dicarboxylic acid-based compound, an aliphatic glycol compound, and the poly (neopentylene sebacate) oligomer to prepare a polyester polymer.

The step (A) may include: (A-1) performing an esterification reaction of sebacic acid and an excess of neopentylene glycol to prepare a precursor; and (A-2) performing polycondensation of the precursor to prepare a poly (neopentylene sebacate) oligomer.

Specifically, in the step (A-1), the esterification reaction may be performed under the following conditions: a molar ratio of the sebacic acid to the neopentylene glycol may be adjusted to 1:1.0 to 3.0, preferably 1:1.1 to 2.0, and more preferably 1:1.1 to 1.5; a reaction temperature may be 200 to 250°C, preferably 200 to 230°C; and the catalyst may be a tin-based catalyst such as tin oxide, or a titanium-based catalyst such as tetraethyl titanate, tetra-n-propyl titanate, tetra-isopropyl titanate, tetrabutyl titanate, tetra-isobutyl titanate, or butyl-isopropyl titanate. The content of the catalyst may be 0.00001 to 1 part by weight, or 0.0001 to 0.15 part by weight, based on 100 parts by weight of the total of sebacic acid and neopentylene glycol. However, the content is not limited as long as it does not adversely affect the properties intended in the present disclosure. The precursor of the poly(neopentylene sebacate) oligomer may be prepared through the esterification reaction.

In addition, the step (A-1) may be performed at a reaction temperature of 200 to 260°C, preferably 220 to 240°C, under vacuum conditions of 0.5 to 1 torr, and a poly(neopentylene sebacate) oligomer may be prepared by performing polycondensation of the precursor. The polycondensation time may be 1 to 60 minutes, preferably 2 to 30 minutes. When the polycondensation time falls within the above range, a poly (neopentylene sebacate) oligomer having the molecular weight range described above may be prepared, and a biodegradable polyester polymer comprising the same may secure improved tackiness and transparency.

In addition, in the steps of the esterification reaction and polycondensation, a stabilizer may be further added in addition to the catalyst. Non-limiting examples thereof include, but are not limited to, phosphorous acid, trimethyl phosphate, and triphenyl phosphate. The content of the stabilizer may be 0.000001 to 1 part by weight, or 0.000005 to 0.1 part by weight, based on 100 parts by weight of the total of the sebacic acid and neopentylene glycol. However, the content is not limited as long as it does not adversely affect the properties intended in the present disclosure.

In the step (A), as the neopentylene glycol is added in excess, the terminal of the poly(neopentylene sebacate) oligomer may have a hydroxyl group. In particular, when the sebacic acid and neopentylene glycol falls within the above molar ratio range, the poly(neopentylene sebacate) oligomer prepared may fall within the molecular weight range described above, which is preferable.

The step (B) of reacting a dicarboxylic acid-based compound, an aliphatic glycol compound, and the poly(neopentylene sebacate) oligomer to prepare a polyester polymer, may include: (B-1) reacting a polymerizable composition comprising the dicarboxylic acid-based compound, the aliphatic glycol compound, and the poly(neopentylene sebacate) oligomer to prepare a precursor; and (B-2) performing polycondensation of the precursor to prepare a biodegradable polyester polymer.

The detailed description and examples of the dicarboxylic acid-based compound, the aliphatic glycol compound, and the poly (neopentylene sebacate) oligomer in the step (B-1) are the same as those described above.

In a specific aspect, in the step (B-1), the reaction may be an esterification reaction, a transesterification reaction, or a combination thereof. Specifically, the reaction may be an esterification reaction. In the step (B-1), a polymerizable composition comprising an aromatic dicarboxylic acid among the dicarboxylic acid-based compounds, an aliphatic glycol compound, and a catalyst may first be introduced to perform a primary esterification reaction at a temperature of 180 to 280°C, followed by introducing a polymerizable composition comprising an aliphatic carboxylic acid and a catalyst to perform a secondary esterification reaction at a temperature of 180 to 260°C.

In the step (B-1), as the catalyst, one or a combination of two or more selected from tin-based catalysts such as antimony oxide and tin oxide, and titanium-based catalysts such as tetraethyl titanate, tetra-n-propyl titanate, tetra-isopropyl titanate, tetrabutyl titanate, tetra-isobutyl titanate, and butyl-isopropyl titanate may be used. The content of the catalyst may be 0.00001 to 1 part by weight, or 0.0001 to 0.15 parts by weight, based on 100 parts by weight of the total of the dicarboxylic acid-based compound and the aliphatic glycol compound. However, the content is not limited as long as it does not adversely affect the properties intended in the present disclosure.

In another specific aspect, an aliphatic carboxylic acid, an aliphatic glycol compound, and a catalyst may first be introduced to perform a primary esterification reaction at a temperature of 180 to 280°C, followed by introducing an aliphatic carboxylic acid and a catalyst to perform a secondary esterification reaction at a temperature of 180 to 260°C. The specific examples and contents of the compound for the catalyst are the same as those described above.

The poly (neopentylene sebacate) oligomer may be added to the polymerizable composition during the primary or secondary reaction of the step (B-1) and copolymerized therewith. The content of the poly(neopentylene sebacate) oligomer may be 0.1 to 20 parts by weight, preferably 0.5 to 10 parts by weight, and more preferably 1 to 5 parts by weight, based on 100 parts by weight of the total of the dicarboxylic acid-based compound and the aliphatic glycol compound.

The step (B-2) of performing polycondensation of the precursor to prepare a biodegradable polyester polymer, may be performed under the catalyst described above at a reaction temperature condition of 200 to 280°C, preferably 220 to 270°C. The content of the catalyst may be 0.00001 to 1 part by weight, or 0.0001 to 0.5 parts by weight, based on 100 parts by weight of the total of the dicarboxylic acid-based compound and the aliphatic glycol compound. However, the content is not limited as long as it does not adversely affect the properties intended in the present disclosure.

In another aspect, the poly(neopentylene sebacate) oligomer may be introduced in step (B-2) instead of step (B-1).

In the steps of the esterification reaction and polycondensation, a stabilizer may be further added in addition to the catalyst. Non-limiting examples thereof include, but are not limited to, phosphorous acid, trimethyl phosphate, and triphenyl phosphate. The content of the stabilizer may be 0.000001 to 1 part by weight, or 0.000005 to 0.1 parts by weight, based on 100 parts by weight of the total of the dicarboxylic acid-based compound and the aliphatic glycol compound. However, the content is not limited as long as it does not adversely affect the properties intended in the present disclosure.

Hereinafter, the present disclosure will be described in more detail with reference to the following examples and comparative examples. However, the following examples and comparative examples are provided merely to illustrate the present disclosure in more detail, and are not intended to limit the scope of the present disclosure.

### [Measurement methods for properties]

1) Molecular weight [g/mol]: A sample with a concentration of 1 wt% of oligomer or polymer in THF was prepared, and the weight-average molecular weight (Mw) was measured using gel permeation chromatography (GPC, Waters 2690 model HPLC/RI Detector). Polystyrene (PS) was used as the standard sample, and the flow rate was set to 1.0 mL/min and the column temperature was set to 40.0°C for measurement.
2) Glass transition temperature (Tg) [°C]: The glass transition temperature was measured by increasing the temperature from -50°C to 100°C at a rate of 10°C per minute using a differential scanning calorimeter (DSC).
3) Solubility and storage stability: An adhesive composition was prepared by stirring a mixture of 50 wt% of biodegradable polyester polymer, 30 wt% of toluene, and 20 wt% of methyl ethyl ketone were stirred for 10 minutes to prepare an adhesive composition. The state of the composition immediately after stirring was observed to evaluate solubility. In addition, the composition was left at room temperature for 1 month, and changes in the composition were observed to evaluate storage stability. The evaluation criteria are as follows. Here, precipitation refers to the formation of solid precipitates such as gels within the composition rather than a liquid.
   Excellent: No precipitation
   Good: Precipitation of 10 vol% or less of the composition
   Fair: Precipitation greater than 10 vol% but 25 vol% or less of the composition
   Poor: Precipitation greater than 25 vol% of the composition
4) Peel Strength: An adhesive composition containing 50 wt% biodegradable polyester polymer in toluene was applied to A4 paper at a thickness of approximately 50 µm and dried for 1 hour. Then, another A4 paper was covered to prevent bubbles from forming and a 2kg roller was used to apply uniform pressure. The peel strength was evaluated in the process of peeling off two A4 papers at a constant speed.
   Strong: Two A4 papers were torn without being peeled off
   Moderate: Two A4 papers were peeled off with difficulty without being torn
   Weak: Two A4 papers were peeled off very easily
5) Tackiness at room temperature: An adhesive composition containing 50 wt% biodegradable polyester polymer in toluene was applied to A4 paper at a thickness of approximately 50 µm and dried at room temperature for 1 hour. The stickiness of the adhesive surface was evaluated by hand on a scale of 1 (no stickiness) to 10 (very sticky), and the results are shown in Table 2 below. A high degree of stickiness was considered to indicate better tackiness at room temperature.

### [Preparation Example 1] Preparation of poly(neopentyl sebacate) oligomer

In a 500 mL round-bottom flask, 202.25 g (1 mol) of sebacic acid, 130.2 g (1.25 mol) of neopentylene glycol, and 0.031 g of tin oxide were added, and the esterification reaction was performed while gradually increasing the temperature to 200 to 210°C. After the water was completely removed, 0.015 g of phosphorous acid as a stabilizer was added, and polycondensation was performed under a vacuum of 1 torr for 5 minutes while gradually increasing the temperature to 230°C. After the reaction was completed, the poly(neopentyl sebacate) oligomer according to Preparation Example 1 was finally obtained. The weight-average molecular weight of the oligomer measured by GPC was 4100 g/mol.

### [Preparation Example 2] Preparation of poly(neopentyl sebacate) polymer

A poly(neopentyl sebacate) polymer according to Preparation Example 2 was obtained in the same manner as in Preparation Example 1, except that the polycondensation was performed at 230°C and under a vacuum below 1 torr for 90 minutes in the polycondensation step of Preparation Example 1. The weight-average molecular weight of the polymer was 42,080 g/mol.

### - Preparation of biodegradable polyester polymer

### [Example 1]

Into a 500 mL round-bottom flask, a dicarboxylic acid-based compound of 8.31 g (0.05 mol) of terephthalic acid and 8.31 g (0.05 mol) of isophthalic acid, an aliphatic glycol compound of 72.90 g (0.7 mol) of neopentyl glycol, 18.02 g (0.2 mol) of 1,4-butanediol, 12.41 g (0.2 mol) of ethylene glycol, and 22.83 g (0.3 mol) of propylene glycol, and 0.003 g of tetrabutyl titanate as a catalyst were added, and the temperature was gradually increased to 220°C while maintaining the pressure at 1 kgf/cm² to perform a (primary) esterification reaction. After the theoretical amount of water was completely removed, a dicarboxylic acid-based compound of 121.35 g (0.6 mol) of sebacic acid, 21.92 g (0.15 mol) of adipic acid, and 17.71 g (0.15 mol) of succinic acid, 0.1 g of malic acid as a polyfunctional compound, 6 g of the poly(neopentylene sebacate) oligomer of the Preparation Example 1, 0.003 g of antimony oxide as a catalyst, 0.032 g of tetrabutyl titanate, and 0.02 g of triphenyl phosphate as a stabilizer were added thereto under atmospheric pressure, and a (secondary) esterification reaction was performed at a temperature of 220°C. After the water was completely removed, 0.004 g of tin oxide as a catalyst and 0.002 g of trimethyl phosphate as a stabilizer were added thereto and stirred for 10 minutes, reacted under low vacuum for 30 minutes, and then polycondensation was performed at 240°C under 0.5 torr for 140 minutes. After the reaction was completed, the biodegradable polyester polymer according to Example 1 was finally obtained.

### [Example 2]

Into a 500 mL round-bottom flask, a dicarboxylic acid-based compound of 161.80 g (0.8 mol) of sebacic acid and 23.62 g (0.2 mol) of succinic acid, an aliphatic glycol compound of 93.73 g (0.9 mol) of neopentylene glycol, 22.53 g (0.25 mol) of 1,4-butanediol, 6.21 g (0.1 mol) of ethylene glycol, and 11.41 g (0.15 mol) of propylene glycol, 0.3 g of malic acid as a polyfunctional compound, 4 g of the poly(neopentylene sebacate) oligomer of the Preparation Example 1, and 0.003 g of tetrabutyl titanate were added, and the temperature was gradually increased to 220°C under atmospheric pressure to perform an esterification reaction. After the theoretical amount of water was completely removed, 0.003 g of antimony oxide, 0.002 g of tetrabutyl titanate, and 0.0015 g of phosphorous acid as a stabilizer were added thereto. The mixture was stirred for 10 minutes, the temperature was gradually increased to 245°C, the reaction was performed for 30 minutes under a low vacuum system, and then polycondensation was performed for 130 minutes under a high vacuum of 0.6 torr.

### [Example 3]

A biodegradable polyester polymer according to Example 3 was obtained in the same manner as in Example 1, except that in the primary esterification reaction of the Example 1, a dicarboxylic acid-based compound of 16.61 g (0.1 mol) of isophthalic acid, an aliphatic glycol compound of 93.73 g (0.9 mol) of neopentyl glycol, 22.53 g (0.25 mol) of 1,4-butanediol, 6.21 g (0.1 mol) of ethylene glycol, and 11.41 g (0.15 mol) of propylene glycol were added, and in the secondary esterification reaction, a dicarboxylic acid-based compound of 161.80 g (0.8 mol) of sebacic acid and 14.61 g (0.1 mol) of adipic acid, and 4 g of the poly(neopentylene sebacate) oligomer of the Preparation Example 1 were added.

### [Example 4]

A biodegradable polyester polymer according to Example 4 was obtained in the same manner as in Example 1, except that in the primary esterification reaction of the Example 1, a dicarboxylic acid-based compound of 24.92 g (0.15 mol) of isophthalic acid, an aliphatic glycol compound of 83.32 g (0.8 mol) of neopentyl glycol, 9.01 g (0.1 mol) of 1,4-butanediol, and 45.65 g (0.6 mol) of propylene glycol were added, and in the secondary esterification reaction, a dicarboxylic acid-based compound of 171.91 g (0.85 mol) of sebacic acid, and 4 g of the poly(neopentylene sebacate) oligomer of the Preparation Example 1 were added.

### [Example 5]

A biodegradable polyester polymer according to Example 5 was obtained in the same manner as in Example 1, except that in the primary esterification reaction of the Example 1, a dicarboxylic acid-based compound of 16.61 g (0.1 mol) of terephthalic acid and 2.49 g (0.015 mol) of isophthalic acid, an aliphatic glycol compound of 93.73 g (0.9 mol) of neopentyl glycol, 6.21 g (0.1 mol) of ethylene glycol, and 30.44 g (0.4 mol) of propylene glycol were added, and in the secondary esterification reaction, a dicarboxylic acid-based compound of 171.91 g (0.85 mol) of sebacic acid, 0.15 g of malic acid as a polyfunctional compound, and 4 g of poly (neopentylene sebacate) oligomer of the Preparation Example 1 were added.

### [Example 6]

A biodegradable polyester polymer according to Example 6 was obtained in the same manner as in Example 1, except that in the primary esterification reaction of the Example 1, a dicarboxylic acid-based compounds of 16.61 g (0.1 mol) of terephthalic acid and 16.61 g (0.1 mol) of isophthalic acid, 62.49 g (0.6 mol) of neopentyl glycol were added, and in the secondary esterification reaction, a dicarboxylic acid-based compound of 121.35 g (0.8 mol) of sebacic acid, 14.61 g (0.1 mol) of adipic acid, and 11.81 g (0.1 mol) of succinic acid, 0.2 g of malic acid as a polyfunctional compound, and 5 g of poly (neopentylene sebacate) oligomer of the Preparation Example 1 were added.

### [Comparative Example 1]

The Comparative Example 1 was performed in the same manner as in Example 1, except that the poly (neopentylene sebacate) oligomer of the Preparation Example 1 was not added in the Example 1.

### [Comparative Example 2]

A biodegradable polyester polymer according to Comparative Example 2 was obtained in the same manner as in Example 1, except that in the primary and secondary esterification reactions of the Example 1, trimethylolpropane was added in the same molar amount instead of neopentyl glycol.

### [Comparative Example 3]

The Comparative Example 3 was performed in the same manner as in Example 1, except that the poly (neopentylene sebacate) polymer of the Preparation Example 2 was added instead of the poly(neopentylene sebacate) oligomer of the Preparation Example 1 in the Example 1. The Comparative example 3 had poor reactivity, and the peel strength and tackiness of the obtained polymer were very poor.

The compositions and properties of the Examples 1 to 6 and Comparative Examples 1 and 2 are shown in Tables 1 and 2 below.

**[Table 1]**

| Added amount (g) | Example 1 | Examp le 2 | Example 3 | Example 4 | Example 5 | Example 6 | Comp. Example 1 | Comp. Example 2 |
|---|---|---|---|---|---|---|---|---|
| Terephthalic acid | 8.3 | - | - | - | 16.6 | 16.6 | 8.3 | 8.3 |
| Isophthalic acid | 8.3 | - | 16.6 | 24.9 | 2.5 | 16.6 | 8.3 | 8.3 |
| Sebacic acid | 121.4 | 161.8 | 161.8 | 171.9 | 171.9 | 121.4 | 121.4 | 121.4 |
| Adipic acid | 21.9 | - | 14.6 | - | - | 14.6 | 21.9 | 21.9 |
| Succinic acid | 17.7 | 23.6 | - | - | - | 11.8 | 17.7 | 17.7 |
| Malic acid | 0.1 | 0.3 | 0.1 | 0.1 | 0.2 | 0.2 | 0.1 | 0.1 |
| Neopentyl glycol | 72.9 | 93.7 | 93.7 | 83.3 | 93.7 | 62.5 | 72.9 | - |
| Trimethylol propane | - | - | - | - | - | - | - | 93.92 |
| 1.4-Butanediol | 18 | 22.5 | 22.5 | 9 | - | 18 | 18 | 18 |
| Ethylene glycol | 12.4 | 6.2 | 6.2 | - | 6.2 | 12.4 | 12.4 | 12.4 |
| Propylene glycol | 22.8 | 11.4 | 11.4 | 45.7 | 30.4 | 22.8 | 22.8 | 22.8 |
| Poly (neopen tylene sebacate) | 6 | 4 | 4 | 4 | 4 | 5 | - | 6 |

**[Table 2]**

| | Example 1 | Example 2 | Example 3 | Example 4 | Example 5 | Example 6 | Comp. Example 1 | Comp. Example 2 |
|---|---|---|---|---|---|---|---|---|
| Tg (°C) | -41 | -44 | -42 | -40 | -43 | -40 | -34 | -20 |
| Mw (g/mol) | 89,000 | 110000 | 108000 | 120000 | 130000 | 127000 | 101000 | 94000 |
| Solubility | Good | Excellent | Excellent | Excellent | Excellent | Good | Good | Poor |
| Storage stability | Good | Excellent | Excellent | Good | Excellent | Fair | Fair | Poor |
| Peel strength | Strong | Strong | Strong | Strong | Strong | Medium | Weak | Weak |
| Tackiness at room temperature | 6 | 10 | 8 | 7 | 8 | 6 | 2 | 1 |

It was confirmed from the above Tables 1 and 2 that when the biodegradable polyester polymer was prepared using the poly(neopentyl sebacate) oligomer according to Preparation Example 1, a biodegradable adhesive composition having a glass transition temperature of -40°C or less, excellent peel strength, and tackiness at room temperature can be prepared even without the inclusion of a separate tackifier. In addition, it could be confirmed from the comparison of Examples 1 and 6 and Comparative Examples that when a diol was used instead of a polyol, and especially when the amount of neopentyl glycol was 50 mol% or more of the total moles of aliphatic glycol compounds, improved solubility and storage stability were exhibited.

Moreover, it was confirmed from additional Examples that when a small amount of malic acid, which is a polyfunctional compound, was not included, the peel strength and tackiness at room temperature were inferior compared to when it was included, thereby verifying the effect of the polyfunctional compound in improving tackiness and peel strength.

## Claims

1. A biodegradable polyester polymer prepared from a polymerizable composition comprising: (a) a dicarboxylic acid-based compound including an aromatic dicarboxylic acid, an aliphatic dicarboxylic acid, or a mixture thereof, (b) an aliphatic glycol compound, and (c) a poly(neopentyl sebacate) oligomer.

2. The biodegradable polyester polymer of claim 1, wherein the poly(neopentyl sebacate) oligomer has a weight average molecular weight (Mw) of 2,000 to 6,000 g/mol.

3. The biodegradable polyester polymer of claim 1, wherein the poly(neopentyl sebacate) oligomer is included in an amount of 0.1 to 10 wt%, based on the total weight of the polymerizable composition.

4. The biodegradable polyester polymer of claim 1, wherein the polymerizable composition further comprises a multifunctional compound containing three or more polymerizable functional groups.

5. The biodegradable polyester polymer of claim 4, wherein the polyfunctional compound is included in an amount of 0.01 to 3 wt%, based on the total weight of the polymerizable composition.

6. The biodegradable polyester polymer of claim 1, wherein the aliphatic glycol compound includes a C₅-C₇ aliphatic glycol compound.

7. The biodegradable polyester polymer of claim 1, wherein the aliphatic glycol compound includes 30 to 90 mol% of neopentyl glycol and 10 to 70 mol% of a C₂-C₄ glycol.

8. The biodegradable polyester polymer of claim 1, wherein the aliphatic dicarboxylic acid is one or a combination of two or more selected from the group consisting of oxalic acid, malonic acid, succinic acid, glutaric acid, adipic acid, pimelic acid, sebacic acid, azelaic acid, 1,9-nonanedicarboxylic acid, 1,10-decanedicarboxylic acid, and anhydride derivatives thereof.

9. The biodegradable polyester polymer of claim 1, wherein the aromatic dicarboxylic acid is one or a combination of two or more selected from the group consisting of phthalic acid, isophthalic acid, and terephthalic acid.

10. The biodegradable polyester polymer of claim 1, wherein the aliphatic dicarboxylic acid is included in an amount of 50 to 100 wt%, based on the total weight of the dicarboxylic acid-based compound.

11. The biodegradable polyester polymer of claim 1, wherein a molar ratio of the dicarboxylic acid-based compound and the aliphatic glycol compound is 1:1 to 2.

12. The biodegradable polyester polymer of claim 1, wherein the weight average molecular weight (Mw) is 60,000 to 150,000 g/mol.

13. The biodegradable polyester polymer of claim 1, wherein the glass transition temperature is -40°C or less.

14. A biodegradable adhesive composition comprising the biodegradable polyester polymer of any one of claims 1 to 13.

15. A method for preparing a biodegradable polyester polymer, comprising:
(A) performing an esterification reaction of sebacic acid and an excess of neopentylene glycol, followed by polycondensation to prepare a poly(neopentylene sebacate) oligomer, and
(B) performing esterification and transesterification reactions of a dicarboxylic acid-based compound, an aliphatic glycol compound, and the poly (neopentylene sebacate) oligomer, followed by polycondensation to prepare a polyester polymer.

16. The method of claim 15, wherein in the step (A), a molar ratio of the sebacic acid and the neopentylene glycol is 1:1.1 to 1.5.
